# EUROPÄISCHE PATENTSCHRIFT

(11) **EP 3 611 419 B1**
(45) Veröffentlichungstag und Bekanntmachung des Hinweises auf die Patenterteilung: **16.03.2022**
(21) Anmeldenummer: 18188826.4
(22) Anmeldetag: 14.08.2018
(51) Int. Cl.: F16L 37/00, F16L 55/175, F16L 55/179, F16L 41/06, F16L 41/08, F16L 41/12

(54) **BOHRLOCHHÜLSE FÜR EINE ANBOHRARMATUR UND VERFAHREN ZUM ABDICHTEN EINES ROHRES**
BOREHOLE SLEEVE FOR A DRILLED FITTING AND METHOD FOR SEALING A PIPE
MANCHON DE PERFORATION POUR UNE GARNITURE DE PERCAGE ET PROCÉDÉ POUR ÉTANCHER UN TUBE

(43) Veröffentlichungstag der Anmeldung: 19.02.2020
(73) Patentinhaber: Wilhelm Ewe GmbH & Co. KG, 38104 Braunschweig (DE)
(72) Erfinder: Ewe, Jan-Peter, 38108 Braunschweig (DE); Körber, Jörg, 38104 Braunschweig (DE); Barkowsky, Sascha, 38110 Braunschweig (DE); Inkermann, David, 38108 Braunschweig (DE); Cudok, Anja, 38104 Braunschweig (DE)
(74) Vertreter: Gramm, Lins & Partner Patent- und Rechtsanwälte PartGmbB

(56) Entgegenhaltungen:
- EP-A1- 2 977 660
- DE-C2- 3 808 624
- DE-T2- 69 616 490
- DE-U1- 29 918 122
- JP-A- H0 790 890
- KR-A- 20100 091 139
- KR-B1- 101 047 503
- NL-A- 6 707 980
- US-A1- 2004 245 769
- US-A1- 2007 200 341
- US-B1- 6 884 373

## Beschreibung

Die Erfindung betrifft eine Bohrlochhülse für eine Anbohrarmatur die mindestens einen in einer axialen Richtung bewegbar angeordneten hohlzylindrischen Hülsenkörper und eine hohlzylindrische Dichthülse mit einer Umfangswandung und einen an ihrem freien Ende nach radial außen abstehenden Dichtflansch aufweist.

Eine solche Bohrlochhülse ist beispielsweise aus der DE 10 2016 121 653 A1 bekannt. Wenn unterirdisch verlegte Rohre zum Beispiel durch Korrosion, Alterung oder eine andere Beschädigung Mängel aufweisen, ist die Reparatur oder Erneuerung durch Verfahren, die ein Ausheben von Gräben längst der gesamten Länge des Rohres erfordern, teuer, zeitraubend und verursachen insbesondere in städtischen Gebieten Verkehrsunterbrechungen. Es sind deshalb verschiedene Verfahren bekannt, um Rohre durch eine Rohrauskleidung, welche enganliegend in das Rohr passt und mit der Innenseite des Rohres verbunden werden kann, an Ort und Stelle zu sanieren. Häufig wird in das beschädigte Rohr ein Innenrohr aus Kunststoff eingeschoben, sodass das sanierte Rohr aus einem Außenrohr und einem an der Innenwand des Außenrohres anliegenden Innenrohr besteht.

Von einem unterirdisch verlegten Rohr zweigen einzelne Rohre als Hausanschlüsse ab. Um einen Hausanschluss herzustellen, wird eine Anbohrarmatur, wie sie beispielsweise aus der DE 38 08 674 C2 bekannt ist auf das Rohr aufgesetzt und darauf verspannt, das Rohr radial angebohrt und über die Anbohrarmatur dann die Abzweigleitung zum Hausanschluss geführt. Wenn das Innenrohr eingezogen ist, muss das Innenrohr an der Stelle, an der die Anbohrarmatur angeordnet ist, radial aufgebohrt werden, um den Durchtritt zum Hausanschluss zu gewährleisten. Dann ist es notwendig, das Innenrohr an seiner Innenwandung abzudichten, um zu verhindern, dass das Medium, das in dem sanierten Rohr gefördert wird, in das Erdreich gelangt. Wird ein neuer Hausanschluss von einer sanierten Rohrleitung abgezweigt, müssen über die Anbohrarmatur das Außenrohr und das Innenrohr gemeinsam angebohrt und dann beide Rohre abgedichtet werden.

In der DE 196 07 287 C1 wird dazu vorgeschlagen, eine Dichthülse in das Bohrloch einzusetzen und diese mittels eines axial in einer Abzweigvorrichtung (in Bezug auf das Rohr in radialer Richtung) bewegbaren Einsatz, der in die Hülse eindringt, aufzuweiten, sodass sich das äußere Ende der Dichthülse, das zu einem umlaufenden Vorsprung radial erweitert ist und so einen Dichtflansch ausbildet, an die Innenwandung des Innenrohres anlegt.

Die US 2004/0245769 A1 offenbart einen selbstabdichtenden Einsatz mit einer an seinem einen Ende vorgesehenen Dichtlippe, über die der Einsatz gegenüber der Innenwandung eines Hauptrohres abgedichtet wird. Der Einsatz besteht ausschließlich aus einem elastomeren Kunststoff und ist an seinem im Rohr befindlichen Ende mit einem Anschlagring versehen, durch den das zu tiefe Einschieben des anzuschließenden Rohres in das Hauptrohr verhindert wird.

Die NL 6 707 980 A1 beschreibt eine Bohrlochabdichtung, bei der die Dichtung an ihren Enden mit zwei radialen Flanschen versehen sind, von denen einer an der äußeren Wandung des angebohrten Rohres und der andere an einer in das Innere des Rohres hineingezogene Umbördelung der Rohrwandung anliegt.

Die US 6,884,373 B1 beschreibt ein Verfahren zum Einsetzen einer Abdichtung in eine im Betrieb befindliche Pipeline.

Aus der KR 101 047 503 B1 ist eine Bohrlochhülse bekannt, an deren inneren Ende zwei flexible Dichtringe befestigt sind.

Die US 2007/0200341 A1 offenbart eine Bohrlochabdichtung, bei der ein elastomerer Dichtkörper an seinem einen Ende einen radial hervorstehenden Dichtflansch aufweist, der die Unterlippe einer in den Dichtkörper eingebrachten Umfangsnut ausbildet, die der Dicke der Rohrwandung entspricht, sodass das Rohr beidseitig der Wandung abgedichtet ist.

Die DE 299 18 122 U1 beschreibt eine Manschettendichtung zum seitlichen Anschluss eines Anschlussstopfens an ein Kanalisationsrohr, die in eine seitliche Bohrung des Kanalisationsrohres einsetzbar ist. Die kreissymmetrisch ausgebildete Manschettendichtung weist mindestens eine nach innen gerichtete Dichtlippe sowie an ihrer Vorderseite eine nach außen gerichtete Anlagedichtung auf, die im eingebauten Zustand der Dichtung auf der Außenseite des Kanalisationsrohres zur Anlage kommt.

Die DE 696 16 490 T2 offenbart ein Montageverfahren eines Teils aus elastischem Material auf einem Träger oder in einem Ausschnitt, sowie die Teile aus biegsamem und elastischem Material, insbesondere Manschetten, Dichtungen, Faltenbälge, Absperrorgane, Kuppeln, Muffen und andere Verbindungselemente für die Durchführung des Verfahrens.

Die KR 2010 0091139 A offenbart ein Muffenanschlusssystem für ein Abzweigrohr umfassend ein gekrümmtes Schaufelstück, eine erste Dichtung und eine zweite Dichtung.

Bei der gattungsbildenden Bohrlochdichthülse lässt sich das freie Ende des hohlzylindrischen Hülsenkörpers plastisch verformen, wodurch die Dichthülse an die Innenwandung des Innenrohres angelegt und dort dichtend angepresst wird. Durch den plastisch verformbaren Kopf des Hülsenkörpers erfolgt also eine formschlüssige Abdichtung der Dichthülse in der Bohrung. Das plastische Verformen des Hülsenkörpers muss sehr sorgfältig erfolgen, um sicherzustellen, dass die Dichthülse nur dichtend an die Innenwandung angelegt und nicht zerquetscht und dabei gegebenenfalls beschädigt wird. Beschädigungen der Dichtung können von außen nicht erkannt werden.

Hiervon ausgehend liegt der Erfindung die Aufgabe zugrunde, die eingangs beschriebene Bohrlochabdichthülse so zu verbessern, dass eine sichere und einfache Abdichtung des Bohrlochs möglich ist.

Zur Lösung dieser Aufgabe zeichnet sich eine gattungsgemäße Bohrlochabdichthülse dadurch aus, dass
- der Hülsenkörper eine Umfangsnut mit einer Tiefe aufweist, die mindestens der Summe aus Materialdicke von Umfangswandung und Dichtflansch beträgt,
- die Dichthülse in der Umfangsnut des Hülsenkörpers angeordnet ist,
- der Dichtflansch elastisch in Richtung der Umfangswandung verschwenkbar ausgebildet ist,
- die Dichthülse mit dem in Richtung der Umfangswandung verschwenkten Dichtflansch zusammen mit dem Hülsenkörper axial bewegbar ist.

Durch diese Ausgestaltung hat die Dichthülse eine pilzförmige Gestalt. Der Dichtflansch kann zum Setzen der Dichthülse an den Hülsenkörper angelegt werden, sodass die Bohrlochabdichthülse in die Bohrung des Rohres eingeführt werden kann. Gelangt das freie Ende des Dichtflansches in das Innenrohr hinein, federt der Dichtflansch nach radial außen auf und vergrößert den Durchmesser. Wird nun die Bohrlochabdichthülse in das Bohrloch zurückgezogen, legt sich das äußere Ende des Dichtflansches an die Innenwandung des Rohres an und dichtet das Innenrohr ab. Dabei wird die Bohrlochabdichthülse soweit zurückgezogen, dass eine sichere Abdichtung erfolgt. Die Dichtung kann dabei aber nicht gequetscht werden, sodass eine Beschädigung der Abdichtung beim Setzen der Bohrlochabdichthülse vermieden wird. Um eine Beschädigung des Dichtflansches zu vermeiden, ist die Tiefe der Umfangsnut im Hülsenkörper mindestens so groß wie die Summe aus der Materialdicke der Umfangswandung und des Dichtflansches, sodass der an die Umfangswandung angelegte Dichtflansch mit der Außenwandung des Hülsenkörpers abschließt, vorzugsweise sogar dahinter zurückliegt, sodass beim Einführen der Bohrlochabdichthülse in das Bohrloch keine Berührung der Dichtung mit den Wandungen der Bohrungen im Außenrohr bzw. Innenrohr erfolgt.

Um die Montage zu vereinfachen, ist der Dichtflansch vorzugsweise in seiner verschwenkten Position lagefixierbar. Dadurch ist das Einführen der Bohrlochabdichthülse in die Bohrung vereinfacht.

Vorzugsweise kann der Dichtflansch an die Umfangswandung der Dichthülse angelegt werden.

Um eine gute Abdichtung zu erreichen, ist das äußere Ende des Dichtflansches im Querschnitt vorzugsweise rund. Dadurch bildet sich eine ringförmige Abdichtung aus, die stabil genug ist, um sich durch den Rohr-Innendruck nicht zu verformen.

Das Abdichten eines mit einer Bohrung versehenen Mehrschicht- oder Sanierungsrohrs bestehend aus einem mit einer ersten Bohrung versehenen Außenrohr und einem mit einer zweiten, zu der ersten Bohrung konzentrischen zweiten Bohrung versehenen Innenrohr mit einer eine Bohrlochabdichthülse aufweisenden Anbohrarmatur zeichnet sich erfindungsgemäß durch folgende Schritte aus:
- Verschwenken des Dichtflansches in Richtung der Umfangswandung
- Fixieren des Dichtflansches in seiner verschwenkten Position,
- Einschieben der Bohrlochhülse in axialer Richtung in die Bohrung, bis das äußere Ende des Dichtflansches die zweite Bohrung vollständig passiert hat,
- Lösung der Fixierung des Dichtflansches, sodass dieser in radialer Richtung elastisch zurückfedert,
- zurückziehen der Bohrlochhülse in der Bohrung, wodurch der Dichtflansch gegen die Innenwandung des Innenrohres gezogen wird und das zweite Bohrloch abdichtet.

Nach der Abdichtung des Innenrohres kann von außen in die Bohrungen ein Dichtmittel eingebracht werden, dass die erste Bohrung und die zweite Bohrung gegen die Umfangswandung der Dichthülse abdichtet.

Mit Hilfe einer Zeichnung soll ein Ausführungsbeispiel der Erfindung nachfolgend näher beschrieben werden. Es zeigen:

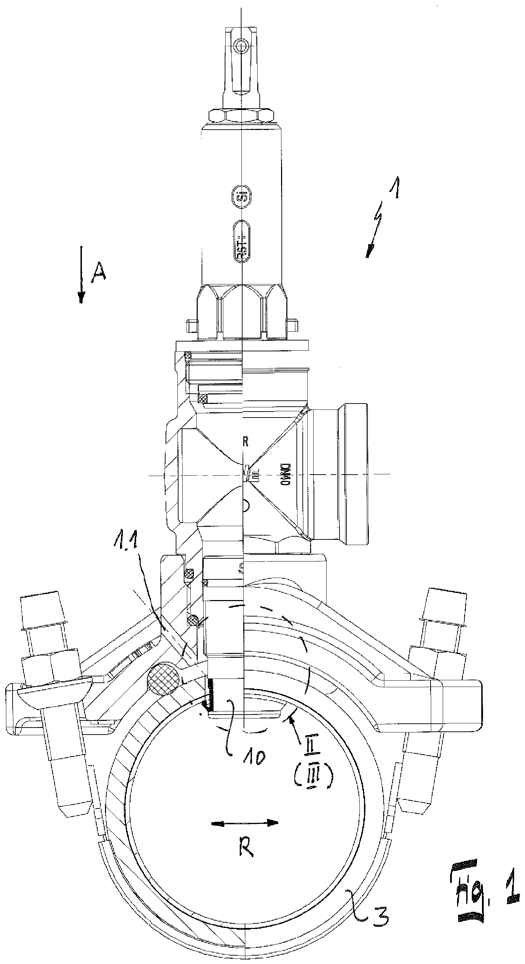

- Figur 1 -: eine auf ein saniertes Rohr aufgesetzte Anbohrarmatur im Teilquerschnitt;

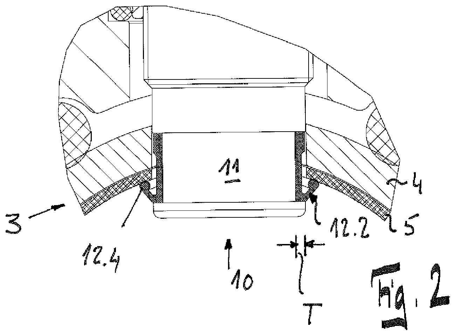

- Figur 2 -: den Ausschnitt nach Sichtpfeil II in Figur 1 bei einer ersten Ausführungsform;
- Figur 3 -: den Ausschnitt nach Sichtpfeil II in Figur 1 bei einer zweiten Ausführungsform;

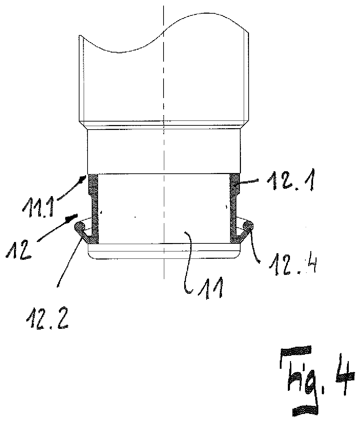

- Figur 4 -: eine Einzelheit aus Figur 1;
- Figur 5 -: die Darstellung nach Figur 2 im Längsschnitt des sanierten Rohres;
- Figur 6a bis 6c -: die schematische Darstellung des Setzens der Abdichtung im Bohrloch.

Das sanierte Rohr 3 besteht aus dem defekten Außenrohr 4 und dem an dessen Innenwandung anliegenden Innenrohr 5, das beispielsweise aus Kunststoff besteht. Die Anbohrarmatur 1 an sich ist beispielsweise aus der DE 10 2005 011 725 B4 bekannt. Diese wird auf das Außenrohr 4 aufgesetzt und darauf verspannt. Über ein in axialer Richtung A bewegbares Bohrwerkzeug werden das Außenrohr 4 und das Innenrohr 5 (oder gegebenenfalls nur das Innenrohr 5) aufgebohrt. In der Anbohrarmatur 1 ist die Bohrlochabdichthülse 10 vorgesehen, die mindestens aus dem hohlzylindrischen Hülsenkörper 11 und der hohlzylindrischen Dichthülse 12 besteht. Der hohlzylindrische Hülsenkörper 11 ist mit einer Umfangsnut 11.1 versehen, die eine Tiefe T aufweist. In dieser Umfangsnut 11.1 ist die hohlzylindrische Dichthülse 12 eingelegt, die an ihrem in das Rohr 3 weisenden freien Ende einen in radialer Richtung R abstehenden Dichtflansch 12.2 aufweist, der an seinem freien Ende 12.3 eine im Querschnitt im wesentlichen runde Verdickung 12.4 aufweist.

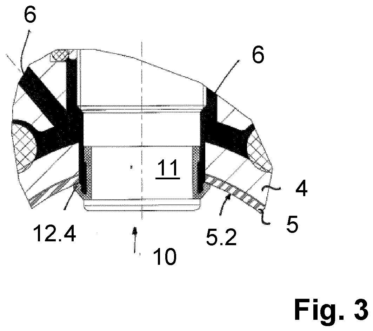

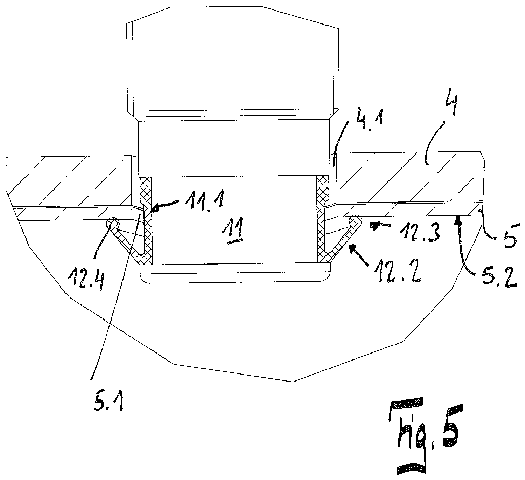

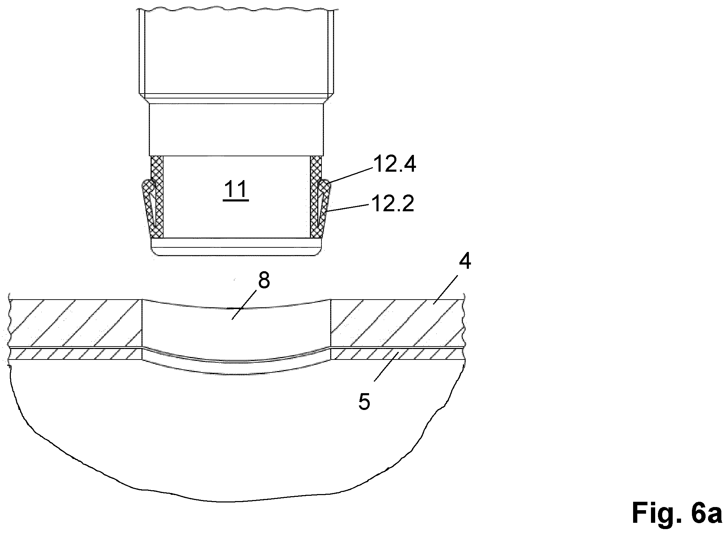

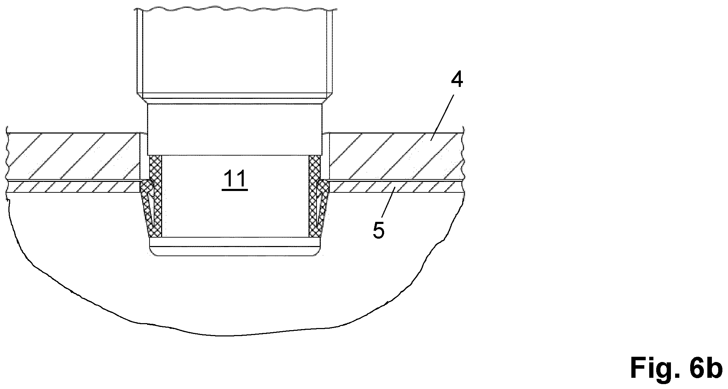

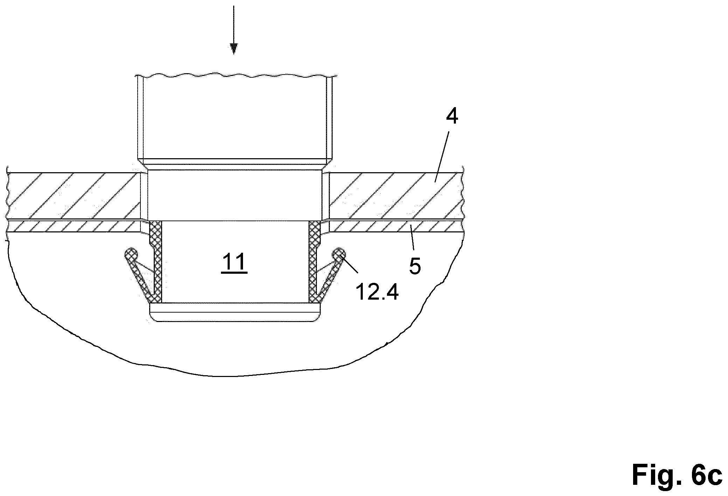

Der Dichtflansch 12.2 ist gegenüber der Umfangswandung 12.1 der Dichthülse 12 elastisch verschwenkbar und kann an die Wandung 12.1 angelegt und dort lagefixiert werden (Figur 6a). Die Tiefe T der Umfangsnut 11.1 ist bevorzugt größer als die Materialdicke der Umfangswandung 12.1 und der Dichtflansch 12.2, damit die Dichthülse 12 beim Setzen der Abbildung durch die Bohrung 4.1, 5.1 hindurchgeführt werden kann, ohne dabei beschädigt zu wenden (vgl. Figur 6b). Dann wird die Bohrlochabdichthülse 10 mit ihrem Hülsenkörper 11 in axialer Richtung A in das Bohrloch 3 eingeschoben, bis der Dichtflansch 12.2 so weit im Inneren des Innenrohres 5 eingetaucht ist, dass er beim Lösen seiner Lagefixierung in radialer Richtung R elastisch ausfedert und dann im Durchmesser größer ist als die Bohrung 5.1 im Innenrohr 5 (Figur 6c). Wird nun der Hülsenkörper 11 in axialer Richtung zurückgezogen, legt sich die Verdickung 12.4 des Dichtflansches 12.2 an der Innenwandung 5.2 des Innenrohres 5 an und dichtet das Innenrohr 5 ab (Figur 5). In dieser Lage wird dann der Hülsenkörper 11 fixiert. Die den Hülsenkörper 11 aufweisende Bohrlochabdichthülse 10 ist vorzugsweise über ein Gewinde in der Anbohrarmatur 1 drehend geführt. Um eine sichere Abdichtung der Bohrlöcher 4.1, 5.1 bzw. des Bohrlochs in dem sanierten Rohr 3 herzustellen, kann von außen über die Bohrung 1.1 ein Dichtmittel in die Bohrungen 4.1, 5.1 eingespritzt werden (vgl. Figur 3), das sich in den Bohrungen 4.1, 5.1 verteilt und an der Umfangswandung 12.1 der Dichthülse 12 anliegt, sodass ausgeschlossen ist, dass das im Innenrohr 5 geförderte Medium aus dem Rohr 3 aus bzw. ins Erdreich eintreten kann, weil über das Dichtmittel verhindert wird, dass der Dichtflansch 12.2 in Richtung der Umfangswandung 12.1 gedrückt werden kann, weil sich auch in dem Zwischenraum zwischen Dichtflansch 12.2 und Umfangswandung dieses Dichtmittel verteilt.

### Bezugszeichenliste

- 1: Anbohrarmatur
- 1.1: Bohrung
- 2: Rohr
- 3: Bohrung
- 4: Außenrohr
- 4.1: Bohrung
- 5: Innenrohr
- 5.1: Bohrung
- 6: Dichtmittel
- 10: Bohrlochabdichthülse
- 11: Hülsenkörper
- 11.1: Umfangsnut
- 12: Dichthülse
- 12.1: Umfangswandung
- 12.2: Dichtflansch
- 12.3: freies Ende
- 12.4: Verdickung
- A: axiale Richtung
- R: radiale Richtung
- T: Tiefe

## Patentansprüche

1. Bohrlochabdichthülse (10) für eine Ventilanbohrarmatur (1) mindestens aufweisend:
a) einen in einer axialen Richtung (A) bewegbar angeordneten hohlzylindrischen Hülsenkörper (11),
b) eine hohlzylindrische Dichthülse (12) mit einer Umfangswandung (12.1) und einem an ihrem freien Ende nach radial außen abstehenden Dichtflansch (12.2)
**dadurch gekennzeichnet, dass**
c) der Hülsenkörper (11) eine Umfangsnut (11.1) mit einer Tiefe (T) aufweist,
d) die Tiefe (T) der Umfangsnut (11.1) mindestens der Summe aus Materialdicke von Umfangswandung (12.1) und Dichtflansch (12.2) beträgt,
e) die Dichthülse (12) in der Umfangsnut (11.1) des Hülsenkörpers (11) angeordnet ist,
f) der Dichtflansch (12.2) elastisch in Richtung der Umfangswandung (12.1) verschwenkbar ausgebildet ist,
g) die Dichthülse (12) mit dem in Richtung der Umfangswandung (12.1) verschwenkten Dichtflansch (12.2) zusammen mit dem Hülsenkörper (11) axial bewegbar ist.

2. Bohrlochabdichthülse (10) nach Anspruch 1, **dadurch gekennzeichnet, dass** der Dichtflansch (12.2) in seiner verschwenkten Position lagefixierbar ist.

3. Bohrlochabdichthülse (10) nach Anspruch 1 oder 2, **dadurch gekennzeichnet, dass** der Dichtflansch (12.2) an die Umfangswandung (12.1) anlegbar ist.

4. Bohrlochabdichthülse (10), nach einem der vorstehenden Ansprüche, **dadurch gekennzeichnet, dass** der Dichtflansch (12.2) an seinem äußeren Ende (12.3) eine im Querschnitt im Wesentlichen runde Verdickung (12.4) aufweist.

5. Verfahren zum Abdichten eines mit einer Bohrung (3) versehenen Mehrschicht- oder Sanierungsrohrs (2) bestehend aus einem mit einer ersten Bohrung (4.1) versehenen Außenrohr (4) und einem mit einer zweiten, zu der ersten Bohrung (4.1) konzentrischen zweiten Bohrung (5.1) versehenen Innenrohr (5) mit einer Bohrlochabdichthülse (10) nach einem der vorstehenden Ansprüche **gekennzeichnet durch** folgende Schritte:
- Verschwenken des Dichtflansches (12.2) in Richtung der Umfangswandung (12.1),
- Fixieren des Dichtflansches (12.2) in seiner verschwenkten Position,
- Einschieben der Bohrlochabdichthülse (10) in axialer Richtung in die Bohrung (3), bis das äußere Ende (12.21) des Dichtflansches (12.2) die zweite Bohrung (5.1) vollständig passiert hat,
- Lösung der Fixierung des Dichtflansches (12.2), sodass dieser in radialer Richtung (R) elastisch zurückfedert,
- zurückziehen der Bohrlochabdichthülse (10) in der Bohrung (3), wodurch der Dichtflansch (12.2) gegen die Innenwandung (5.2) des Innenrohres (5) gezogen wird und das zweite Bohrloch (5.1) abdichtet.

6. Verfahren nach Anspruch 5, **dadurch gekennzeichnet, dass** nach der Abdichtung des Innenrohres (5) von außen in die Bohrungen (4.1, 5.1) ein Dichtmittel (6) eingebracht wird, dass die erste Bohrung (4.1) und die zweite Bohrung (5.1) gegen die Umfangswandung (12.1) der Dichthülse (12) abdichtet.

## Claims

1. A borehole sealing sleeve (10) for a valve tapping fitting (1) comprising at least:
a) one hollow cylindrical sleeve body (11) arranged such that it can be moved in an axial direction (A),
b) one hollow cylindrical sealing sleeve (12) with a circumferential wall (12.1) and a sealing flange (12.2) at its free end that protrudes radially outwards,
**characterised in that**
c) the sleeve body (11) features a circumferential groove (11.1) with a depth (T),
d) the depth (T) of the circumferential groove (11.1) is at least the sum of material thickness of circumferential wall (12.1) and sealing flange (12.2),
e) the sealing sleeve (12) is arranged in the circumferential groove (11.1) of the sleeve body (11),
f) the sealing flange (12.2) is designed to be elastic and such that it can be swivelled in the direction of the circumferential wall (12.1),
g) the sealing sleeve (12) with the sealing flange (12.2) that has been swivelled in the direction of the circumferential wall (12.1) can be moved axially together with the sleeve body (11).

2. The borehole sealing sleeve (10) according to claim 1, **characterised in that** the sealing flange (12.2) can be fixed in place in its swivelled position.

3. The borehole sealing sleeve (10) according to claim 1 or 2, **characterised in that** the sealing flange (12.2) can be applied on the circumferential wall (12.1).

4. The borehole sealing sleeve (10) according to one of the preceding claims, **characterised in that** the outer end (12.3) of the sealing flange (12.2) features (12.3) a bulge (12.4) with an essentially round cross-section.

5. A method for sealing a multi-layer or restoration pipe (2) featuring a borehole (3), said pipe being composed of an outer pipe (4) with a first bore (4.1) and an inner pipe (5) with a second bore (5.1) that is concentric to the first bore (4.1), with a borehole sealing sleeve (10) according to one of the preceding claims, **characterised by** the following steps:
- swivelling the sealing flange (12.2) in the direction of the circumferential wall (12.1),
- fixing the sealing flange (12.2) in its swivelled position,
- inserting the borehole sealing sleeve (10) in the axial direction into the bore (3) until the outer end (12.21) of the sealing flange (12.2) has completely passed the second bore (5.1),
- loosening the fixing of the sealing flange (12.2) so that it elastically springs back in the radial direction (R),
- retracting the borehole sealing sleeve (10) in the bore (3), which draws the sealing flange (12.2) against the inner wall (5.2) of the inner pipe (5) and seals the second borehole (5.1).

6. The method according to claim 5, **characterised in that** a sealing agent (6) is inserted into the bores (4.1, 5.1) from outside following the sealing of the inner pipe (5), said sealing agent sealing the first bore (4.1) and the second bore (5.1) against the circumferential wall (12.1) of the sealing sleeve (12)

## Revendications

1. Manchon d'étanchéification de trou percé (10) destiné à une garniture de perçage formant vanne (1), comprenant au moins :
a) un corps de manchon cylindrique creux (11) disposé de manière mobile dans une direction axiale (A),
b) un manchon d'étanchéité cylindrique creux (12) présentant une paroi périphérique (12.1) et une bride d'étanchéité (12.2) faisant saillie radialement vers l'extérieur à son extrémité libre,
**caractérisé en ce que**
c) le corps de manchon (11) présente une rainure périphérique (11.1) d'une profondeur (T),
d) la profondeur (T) de la rainure périphérique (11.1) correspond au moins à la somme de l'épaisseur du matériau de la paroi périphérique (12.1) et de la bride d'étanchéité (12.2),
e) le manchon d'étanchéité (12) est disposé dans la rainure périphérique (11.1) du corps de manchon (11),
f) la bride d'étanchéité (12.2) est réalisée de manière à pouvoir pivoter élastiquement en direction de la paroi périphérique (12.1),
g) le manchon d'étanchéité (12) avec la bride d'étanchéité (12.2) pivotée en direction de la paroi périphérique (12.1) est mobile axialement conjointement avec le corps de manchon (11).

2. Manchon d'étanchéification de trou percé (10) selon la revendication 1, **caractérisé en ce que** la bride d'étanchéité (12.2) peut être fixée en position dans sa position pivotée.

3. Manchon d'étanchéification de trou percé (10) selon la revendication 1 ou 2,
**caractérisé en ce que** la bride d'étanchéité (12.2) peut être appliquée contre la paroi périphérique (12.1).

4. Manchon d'étanchéification de trou percé (10) selon l'une des revendications précédentes,
**caractérisé en ce que**
la bride d'étanchéité (12.2) présente à son extrémité extérieure (12.3) un épaississement (12.4) de section transversale sensiblement ronde.

5. Procédé d'étanchéification d'un tube multicouche ou d'assainissement (2) pourvu d'un perçage (3), constitué d'un tube extérieur (4), pourvu d'un premier perçage (4.1), et d'un tube intérieur (5) pourvu d'un deuxième perçage (5.1) concentrique au premier perçage (4.1), avec un manchon d'étanchéification de trou percé (10) selon l'une des revendications précédentes, **caractérisé par** les étapes suivantes consistant à :
- pivoter la bride d'étanchéité (12.2) en direction de la paroi périphérique (12.1),
- fixer la bride d'étanchéité (12.2) dans sa position pivotée,
- insérer le manchon d'étanchéification de trou percé (10) en direction axiale dans le perçage (3) jusqu'à ce que l'extrémité extérieure (12.21) de la bride d'étanchéité (12.2) ait complètement traversé le deuxième perçage (5.1),
- détacher la fixation de la bride d'étanchéité (12.2), de sorte que celle-ci revienne élastiquement en retour en direction radiale (R),
- retirer le manchon d'étanchéification de trou percé (10) dans le perçage (3), moyennant quoi la bride d'étanchéité (12.2) est tirée contre la paroi intérieure (5.2) du tube intérieur (5) et vient étanchéifier le deuxième trou percé (5.1).

6. Procédé selon la revendication 5, **caractérisé en ce qu'**après avoir étanchéifié le tube intérieur (5), un produit d'étanchéité (6) est introduit depuis l'extérieur dans les perçages (4.1, 5.1), qui rend étanche le premier perçage (4.1) et le deuxième perçage (5.1) contre la paroi périphérique (12.1) du manchon d'étanchéité (12).
